# EUROPÄISCHE PATENTSCHRIFT

(11) **EP 0 992 784 B1**
(45) Veröffentlichungstag und Bekanntmachung des Hinweises auf die Patenterteilung: **07.04.2004**
(21) Anmeldenummer: 99118144.7
(22) Anmeldetag: 11.09.1999
(51) Int. Cl.: G01N 3/60, G01N 1/28

(54) **Vorrichtung und Verfahren zur Messung der Festigkeit und des Thermoschockverhaltens von Materialproben**
Apparatus and method for measuring the strength and thermal shock behaviour of material samples
Appareil et procédé de mesure de la résistance mécanique et du comportement sous choc thermique des échantillons de matériau

(30) Priorität: 05.10.1998 DE 19845594
(43) Veröffentlichungstag der Anmeldung: 12.04.2000
(73) Patentinhaber: ROBERT BOSCH GMBH, 70442 Stuttgart (DE)
(72) Erfinder: Dressler, Wolfgang, 71665 Vaihingen / Enz (DE); Boeder, Horst, 71069 Sindelfingen (DE); Knoblauch, Volker, 70499 Stuttgart (DE); Speicher, Rolf, 70839 Gerlingen (DE)

(56) Entgegenhaltungen:
- EP-A- 0 273 428
- EP-A- 0 838 675
- WO-A-98/05939
- DE-U- 29 617 871
- US-A- 3 682 742
- SOVIET PATENTS ABSTRACTS Section EI, Week 8837, 26. Oktober 1988 (1988-10-26) Derwent Publications Ltd., London, GB; Class S03, AN 88-263342 XP002128378 & SU 1 381 372 A (AS UKR STRENGTH PROBLEMS), 15. März 1988 (1988-03-15)
- SOVIET PATENTS ABSTRACTS Section EI, Week 9148, 22. Januar 1992 (1992-01-22) Derwent Publications Ltd., London, GB; Class S03, AN 91-352343 XP002128379 & SU 1 620 916 A (AS UKR STRENGTH PROBLEMS), 15. Januar 1991 (1991-01-15)
- PATENT ABSTRACTS OF JAPAN vol. 015, no. 251 (P-1220), 26. Juni 1991 (1991-06-26) & JP 03 081642 A (JAPAN ATOM ENERGY RES INST), 8. April 1991 (1991-04-08)
- AWAJI H ET AL: "Thermal shock fracture testing for float glass by infrared radiation technique" JOURNAL OF THE CERAMIC SOCIETY OF JAPAN, INTERNATIONAL EDITION, Bd. 103, Nr. 9, September 1995 (1995-09), Seite 948-953 XP000552185 ISSN 0912-9200
- AKIYAMA S ET AL: "A new method to evaluate the thermal shock resistance of ceramics by laser pulse irradiation" FUSION TECHNOLOGY, Bd. 23, Nr. 4, Juli 1993 (1993-07), Seite 426-434 XP000369725 ISSN 0748-1896

## Beschreibung

Die Erfindung betrifft ein Verfahren zur Messung der Festigkeit von Materialproben nach dem Oberbegriff des Anspruchs 1 sowie eine Vorrichtung zur Fertigung einer Folienprobe nach dem Oberbegriff des Anspruchs 5.

Ein derartiges Verfahren zur Messung der Festigkeit von Materialproben ist aus der WO-A-9805939 bekannt. Dort werden in der zu untersuchenden Materialprobe mit Hilfe der Thermoschockmethode Materialspannungen induziert, die über ein Erfassen des Temperaturprofils der Probe bestimmt werden. Auf eine mögliche induzierte Verformung der Materialprobe wird nicht eingegangen.

Weiter beschreibt das DE-U-29617871 eine Vorrichtung zur Durchführung von Thermo- und Thermoschockuntersuchungen. Die Vorrichtung weist u.a. einen Probenhalter, eine Prozesskammer, eine Heizquelle und eine Temperaturmesseinrichtung auf.

In dem PATENT ABSTRACTS OF JAPAN Bd. 015, Nr. 251 (P-1220), 26. Juni 1991, bzw. der JP-A-03081642 wird eine weitere Methode und eine Vorrichtung zur Durchführung eines Thermoschocktests vorgestellt, wobei die Bruchfestigkeit einer Probe über ihre thermische Ausdehnung bestimmt wird.

In SOVIET PATENTS ABSTRACTS Section EI, Week 8837, 26. Oktober 1988, Class S03, AN 88-263342 bzw. der SU-A-1381372 wird zur Messung der Festigkeit einer Materialprobe auch das Thermoschockverfahren eingesetzt, wobei die Form der Probe derart berechnet und ausgewählt wird, dass bis zum Erreichen der Bruchgrenze unter einer thermischen Belastung ein ebener Spannungszustand vorliegt. Dadurch wird die Präzision der Messung erhöht.

Weiterhin ist in SOVIET PATENTS ABSTRACTS Section EI, Week 9148, 22. Januar 1992, Class S03, AN 91-352343 bzw. der SU-A-1620916 ein Testverfahren an einem Ring beschrieben, der eine runde äußere Oberfläche und mindestens eine Oberfläche in Form eines Hyperboloides aufweist. Zweck dieser Formgebung ist eine genauere Bestimmung der induzierten Spannungen.

Eine Vorrichtung nach dem Oberbegriff des Anspruchs 5 ist aus der US-A-3682742 bekannt. Wichtige Bestandteile dieser Vorrichtung sind ein Formkörper zum Auftragen von Foliensubstrat, ein Rohr zur Fixierung des Formkörpers und ein zweites Rohr zur randseitigen Fixierung des Foliensubstrats auf dem Formkörper.

Schließlich offenbart die EP-A-0273428 u.a. eine Vorrichtung zur Fertigung einer aufgewölbten Folienprobe. Ein Außenrohr, in das ein Formkörper einführbar und mit dem der Formkörper fixierbar ist, ist jedoch nicht vorgesehen.

Aufgabe der Erfindung ist es, ein Verfahren zur Messung der Festigkeit von Materialproben und eine Vorrichtung zur Fertigung von Materialproben aufzuzeigen, wobei die Materialproben eine in Axialrichtung aufgewölbte Form aufweisen. Diese Aufgabe wird mit den unabhängigen Ansprüchen 1 und 5 gelöst. Vorteilhafte Weiterbildungen des erfindungsgemäßen Verfahrens bzw. der Vorrichtung sind in den jeweiligen Unteransprüchen angegeben.

Im Einzelnen zeigen
- Fig. 1: einen schematischen Aufbau einer Meßvorrichtung zur Durchführung der Erfindung,
- Fig. 2: einen theoretischen Verlauf von Radial- bzw. Tangentialspannungen in einer Keramikfolie zum Bruchzeitpunkt unter der Annahme eines ebenen Spannungszustandes,
- Fig. 3: eine reale Tangentialspannung unter sphärischer Aufwölbung der Probe zum Bruchzeitpunkt und
- Fig. 4: eine schematische Schnittzeichnung einer Vorrichtung zur Formung einer erfindungsgemäß geformten Probe.

### Ausführungsbeispiel

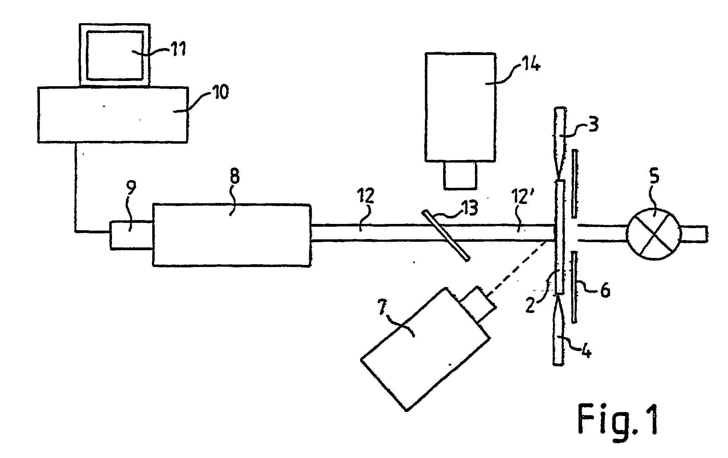

In der Darstellung gemäß Fig. 1 ist eine zur Durchführung der Erfindung geeignete Meßvorrichtung 1 dargestellt, bei der die Folienprobe (2) von zwei Halterungsstiften (3, 4), beispielsweise aus Aluminiumoxid gehalten wird. Eine Halogenlampe (5) beleuchtet die Folienprobe (2) von deren Rückseite her, wobei eine Lochblende (6) vorgesehen wird, um den Spot, auf dem die Folienprobe (2) mittels der Halogenlampe (5) erhitzt wird, einzugrenzen.

Auf der gegenüberliegenden Vorderseite ist ein Pyrometer (7) zur Temperaturmessung der Probe (2) vorgesehen.

Mit Hilfe eines Mikroskops (8) und einer Videokamera (9) können die mechanischen Abläufe in der Probe (2) in einem Datenrekorder oder Speicher eines Computers (10) aufgezeichnet und am Monitor (11) dargestellt werden.

Im Strahlengang (12) des Mikroskops (8) ist ein verfahrbarer Spiegel (13), beispielsweise ein goldbedampfter SI-Waver unter einem Winkel von 45° angeordnet, so daß mit einer Thermokamera (14) im Bereich 12' des Strahlengangs (12) hinter dem Spiegel (13) die Probe (2) zur Temperaturmessung zu beobachten ist. Zur Beobachtung der Probe mit dem Mikroskop wird der Spiegel aus dem Strahlengang herausgefahren.

Mit Hilfe der Halogenlampe (5) wird schockartig Wärmeenergie in dem von der Lochblende (6) freigelassenen Bereich der Probe (2) eingebracht. Über das Pyrometer (7) sowie die Thermokamera (14) läßt sich ein lokales Temperaturprofil aufnehmen sowie dessen zeitlicher Verlauf überwachen. Die mechanischen Abläufe in der Probe 2 werden dabei über das Mikroskop (8) beobachtet. Über die Temperaturprofile lassen sich theoretisch die Spannungen berechnen, die innerhalb der Probe (2) auftreten. Bei einer Steigerung der über die Halogenlampe (5) eingetragenen Energie bis hin zum Bruch der Folienprobe (2) kann somit die Bruchspannung bestimmt werden.

Bislang wurden diese Spannungswerte unter der Annahme eines ebenen Spannungszustandes ohne Berücksichtigung von Biegespannungen berechnet.

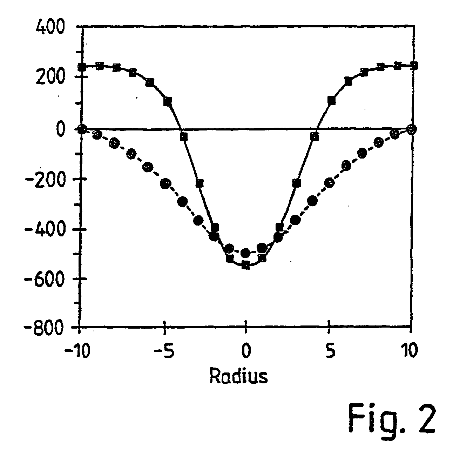

Fig. 2 zeigt den Verlauf der Radial- und Tangentialspannungen zum Bruchzeitpunkt unter der Annahme eines solchen ebenen Spannungszustandes und linear-geometrischem Verhalten. Die mit Punkten markierte Kurve zeigt die Radialspannungen und somit die Druckspannungen zum Bruchzeitpunkt. Diese Radial- bzw. Druckspannungen sind im Außenbereich entlang dem Umfang naturgemäß gleich 0.

Die mit Quadraten markierte Tangential- bzw. Zugspannung zeigt jedoch mit unterschiedlichen Vorzeichen deutlich größere Extremwerte als die Radialspannung. Insbesondere treten am Probenrand, wie anhand des Vorzeichens der Spannung ersichtlich ist, die Tangentialspannungen als Zugspannungen auf. Da man davon ausgehen kann, daß die keramischen Materialien eine erheblich größere Druckspannung als Zugspannung verkraften, kann man unter der Annahme eines ebenen Spannungszustandes davon ausgehen, daß der Bruch einer Probe dementsprechend von Tangentialspannungen bzw. Zugspannungen hervorgerufen wird.

Dieser Ansatz hat sich bei den üblichen Probengeometrien jedoch als falsch erwiesen.

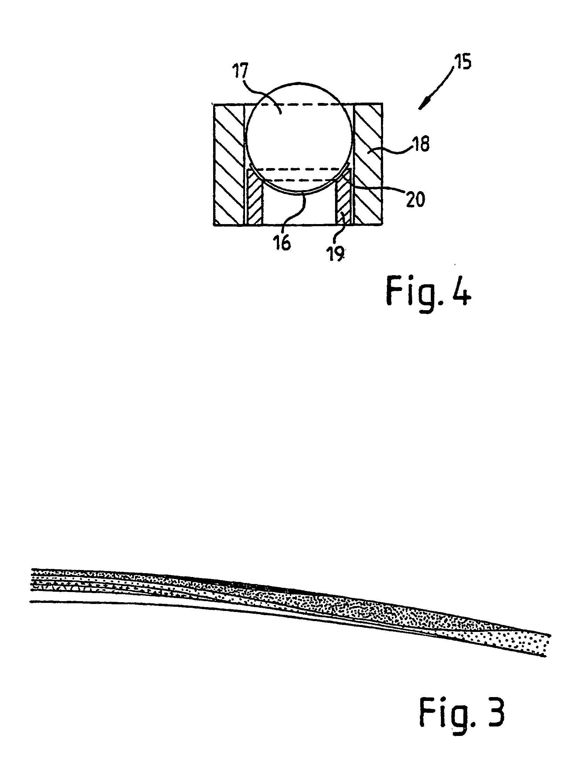

Die realen Spannungsverhältnisse sind in Fig. 3 vereinfacht dargestellt. Die unterschiedlichen Schattierungen zeigen die verschiedenen Spannungswerte im Innern der sphärisch gewölbten Probe. Die sphärisch gewölbte Probe ist der theoretischen Betrachtung zugänglich, die die in Fig. 3 dargestellten Werte ergibt. Bei Verwendung einer bereits vorab sphärisch geformten Probe entspricht daher die unter der Annahme des gegebenen Temperaturprofils berechnete Bruchspannung weitgehend den tatsächlichen realen Verhältnissen. Somit ist mit einer derartigen Probengeometrie im Experiment die Bruchspannung mit Hilfe der Thermoschockmethode meßbar. In Fig. 4 ist beispielhaft eine Vorrichtung (15) zur Formung einer gewölbten Probe (16) dargestellt. Im Beispiel gemäß Fig. 5 wird eine Keramikkugel (17) zur Formung einer sphärisch gewölbten Folienprobe (16) verwendet. Die Keramikkugel (17) wird mit Hilfe eines Außenrohres (18) fixiert, dessen Innendurchmesser im wesentlichen dem Durchmesser der Keramikkugel (17) entspricht, so daß die Keramikkugel (17) in das Außenrohr (18) eingeführt werden kann.

Im Innern des Außenrohrs (18) befindet sich ein Innenrohr (19), dessen Außendurchmesser im wesentlichen dem Innendurchmesser des Außenrohrs (19) entspricht. Das Innenrohr (19) ist somit in Innern des Außenrohrs (18) zentriert und kann zugleich die Folienprobe (16) an ihrem Außenumfang tragen. Im oberen Bereich wird die Wandung des Innenrohrs (19) innenseitig mit einer sphärischen Form (20) unter Einhaltung des Kugelradius der Keramikkugel (17) versehen. Somit kann die Keramikkugel (17) an das Innenrohr (19) angefügt werden. Die Folienprobe (16) wird hierbei zwischen dem Innenrohr und der Keramikkugel (17) fixiert. Die gesamte Vorrichtung (15) kann zum Sintern der Folienprobe (16) erhitzt werden. Nach dem Sintern liegt somit eine durch die Keramikkugel (17) vorgegebenen definierte Probengeometrie vor, die in einem Versuchsaufbau gemäß der Meßvorrichtung 1 (vergleiche Fig. 1) vermessen werden kann. Bei dieser Probengeometrie sind hinterher zur Bestimmung der realen Spannungen Berechnungen wie anhand Fig. 4 beschrieben, durchzuführen.

Zur Herstellung von Folienproben (16) mit anderer Wölbung, beispielsweise kosinusförmiger Wölbung ist anstelle der Keramikkugel (17) sowie der sphärischen Form (20) am Innenrohr (19) ein entsprechend geformter, in das Außenrohr (18) passender Formkörper zu verwenden und das Innenrohr (19) an seinem oberen Bereich entsprechend anzupassen.

Aufgrund einer gewölbten Folienprobe läßt sich gemäß der Erfindung nunmehr die tatsächlich vorliegende Bruchspannung an einer dünnen Folienprobe mit Hilfe des Thermoschockverfahrens bestimmen.

### Bezugszeichenliste:

- 1: Meßvorrichtung
- 2: Folienprobe
- 3: Stift
- 4: Stift
- 5: Halogenlampe
- 6: Lochblende
- 7: Pyrometer
- 8: Mikroskop
- 9: Videokamera
- 10: Computer
- 11: Monitor
- 12: Strahlengang
- 13: Spiegel
- 14: Thermokamera
- 15: Vorrichtung
- 16: Folienprobe
- 17: Keramikkugel
- 18: Außenrohr
- 19: Innenrohr
- 20: sphärische Form

## Patentansprüche

1. Verfahren zur Messung der Festigkeit einer achsensymmetrischen, gewölbten Materialprobe (16) mit Hilfe der Thermoschockmethode unter Benutzung eines ersten Mittels (7, 8, 9, 14) zur Temperaturerfassung, wobei in der Materialprobe (16) durch Aufheizen mit einem zweiten Mittel (5) Spannungen induziert und diese durch Erfassen des Temperaturprofils bestimmt werden, **dadurch gekennzeichnet, dass** die Materialprobe (16) in Axialrichtung eine aufgewölbte Form aufweist und in der Materialprobe (16) neben den Spannungen auch eine Verformung induziert wird, wobei die Form der Materialprobe (16) vorab so bestimmt wurde, dass mittels des Erfassens des Temperaturprofils der Materialprobe (16) unter Berücksichtigung der auftretenden Verformung der Materialprobe (16) die induzierten Materialspannungen bestimmbar sind.

2. Verfahren nach Anspruch 1, **dadurch gekennzeichnet, dass** eine insbesondere keramische Folienprobe (16) mit definierter Aufwölbung als Materialprobe eingesetzt wird.

3. Verfahren nach Anspruch 1 oder 2, **dadurch gekennzeichnet, dass** eine Folienprobe (16) mit sphärischer oder cosinusförmiger Aufwölbung als Materialprobe eingesetzt wird.

4. Verfahren nach Anspruch 1, **dadurch gekennzeichnet, dass** als Verformung eine Ausbeulung der Materialprobe (16) induziert wird.

5. Vorrichtung zur Fertigung einer gewölbten Folienprobe (16) mit einem Innenrohr (19), das an einem Ende ein Foliensubstrat an seinem Außenumfang trägt, mit einem Formkörper (17) zum Auftragen des Foliensubstrates, und einem Außenrohr (18), in das der Formkörper (17) einführbar und mit dem der Formkörper (17) fixierbar ist, **dadurch gekennzeichnet, dass** die Folienprobe (16) eine achsensymmetrische, in Axialrichtung aufgewölbte Form, insbesondere eine sphärische Form aufweist, wobei mit dem Formkörper (17) das Foliensubstrat zu der aufgewölbten Folienprobe (16) verwölbbar und als aufgewölbte Folienprobe (16) zwischen dem Innenrohr (19) und dem Formkörper (17) fixierbar ist, und wobei die Vorrichtung zum Sintern der Folienprobe (16) erhitzbar ist.

6. Vorrichtung nach Anspruch 5, **dadurch gekennzeichnet, dass** das Innenrohr (19), das die aufgewölbte Folienprobe (16) mit dem Formkörper (17) fixiert, in dem Außenrohr (18) zur Fixierung des Formkörpers (17) axial geführt ist.

## Claims

1. Method for measuring the strength of an axially symmetrical, curved material sample (16) with the aid of the thermal shock method using a first means (7, 8, 9, 14) for recording temperature, stresses being induced in the material sample (16) by heating using a second means (5), and these stresses being determined by recording the temperature profile, **characterized in that** the material sample (16) has a convex shape in the axial direction and in addition to the stresses a deformation is also induced in the material sample (16), the shape of the material sample (16) having been predetermined in such a way that the material stresses which have been induced can be determined by recording the temperature profile of the material sample (16) taking into account the deformation to the material sample (16) which occurs.

2. Method according to Claim 1, **characterized in that** an in particular ceramic sheet sample (16) with a defined convexity is used as the material sample.

3. Method according to Claim 1 or 2, **characterized in that** a sheet sample (16) with a spherical or cosinusoidal convexity is used as the material sample.

4. Method according to Claim 1, **characterized in that** the deformation induced is a bulging-out of the material sample (16).

5. Device for producing a curved sheet sample (16), having an inner tube (19), which at one end bears a sheet substrate at its outer periphery, having a shaped body (17) for applying the sheet substrate, and an outer tube (18), into which the shaped body (17) can be introduced and by means of which the shaped body (17) can be fixed, **characterized in that** the shape of the sheet sample (16) is axially symmetrical and convex in the axial direction, in particular spherical, it being possible for the shaped body (17) to be used to curve the sheet substrate to form the convex sheet sample (16), and the sheet substrate can be fixed as convex sheet sample (16) between the inner tube (19) and the shaped body (17), and it being possible for the device to be heated in order to sinter the sheet sample (16).

6. Device according to Claim 5, **characterized in that** the inner tube (19), which fixes the convex sheet sample (16) together with the shaped body (17), is guided axially in the outer tube (18) in order to fix the shaped body (17).

## Revendications

1. Procédé pour mesurer la résistance mécanique d'un échantillon de matière bombé (16) possédant une symétrie axiale à l'aide de la méthode du choc thermique en utilisant un premier moyen (7, 8, 9, 14) servant à capter la température, dans lequel on induit des tensions dans l'échantillon de matière (16) en le chauffant à l'aide d'un deuxième moyen (5) et on les détermine en détectant le profil de température
**caractérisé en ce que**
l'échantillon de matière (16) présente une forme bombée dans la direction axiale et, en supplément des tensions, on induit aussi une déformation dans l'échantillon de matière (16), la forme de l'échantillon de matière (16) ayant été déterminée antérieurement de sorte qu'en détectant le profil de température de l'échantillon de matière (16) et en tenant compte de la déformation qui se manifeste dans l'échantillon de matière (16), on peut déterminer les tensions induites dans la matière.

2. Procédé selon la revendication 1,
**caractérisé en ce qu'**
on utilise comme échantillon de matière un échantillon de feuille (16), en particulier céramique, possédant un bombé défini.

3. Procédé selon la revendication 1 ou 2,
**caractérisé en ce qu'**
on utilise comme échantillon de matière un échantillon de feuille (16) possédant un bombé sphérique ou de forme cosinusoïdale.

4. Procédé selon la revendication 1,
**caractérisé en ce que**,
comme déformation, on induit une bosselure de l'échantillon de matière (16).

5. Dispositif pour confectionner un échantillon de feuille bombé (16), comprenant un tube intérieur (19) qui porte à une extrémité un substrat en feuille le long de sa périphérie extérieure, un corps de forme (17) destiné à supporter le substrat en feuille et un tube extérieur (18) dans lequel le corps de forme (17) peut être introduit et avec lequel le corps de forme (17) peut être immobilisé
**caractérisé en ce que**
l'échantillon de feuille (16) présente une forme à symétrie axiale, bombée dans la direction axiale, en particulier une forme sphérique, le substrat en feuille pouvant être bombé au moyen du corps de forme (17) pour constituer l'échantillon de feuille bombé et pouvant être immobilisé en tant qu'échantillon de feuille bombé (16) entre le tube intérieur (19) et le corps de forme (17), et le dispositif pouvant être chauffé pour provoquer le frittage de l'échantillon de feuille (16).

6. Dispositif selon la revendication 5,
**caractérisé en ce que**
le tube intérieur (19) qui immobilise l'échantillon de feuille bombé (16) avec le corps de forme (17) est guidé axialement dans le tube extérieur (18) pour immobiliser le corps de forme (17).
